# EUROPEAN PATENT SPECIFICATION

(11) **EP 3 361 879 B1**
(45) Date of publication and mention of the grant of the patent: **08.07.2020**
(21) Application number: 16778020.4
(22) Date of filing: 06.10.2016
(51) Int. Cl.: A23F 5/40

(54) **KIT FOR DELIVERING A MULTI-LAYERED BEVERAGE**
KIT ZUR BEREITSTELLUNG EINES MEHRSCHICHTIGEN GETRÄNKS
KIT POUR FOURNIR UNE BOISSON MULTICOUCHE

(30) Priority: 16.10.2015 US 201562242741 P
(43) Date of publication of application: 22.08.2018
(73) Proprietor: Société des Produits Nestlé S.A., 1800 Vevey (CH)
(72) Inventor: ROSSE, Marcel, Singapore 279159 (SG); ALEVIZOS, Christos, 01001 Kyiv (UA); RUBIO, Daniel, Dublin, Ohio 43016 (US); KLUNDUK, Marek, 1807 Blonay (CH); MASTNY, Jonathan Daniel, Dublin, Ohio 43016 (US); RAHMANI, Rachid, Marysville, Ohio 43040 (US)
(74) Representative: Krishnan, Sri
(86) International application number: PCT/EP2016/073919
(87) International publication number: WO 2017/063943

(56) References cited:
- EP-A1- 1 129 624
- EP-A1- 1 726 536
- EP-A1- 1 785 369
- EP-A2- 1 042 960
- WO-A1-2009/037493
- WO-A1-2011/063322
- US-A- 6 129 943

## Description

### Field of invention

The present invention relates to a kit configured for delivering a multi-layered beverage.

### Background of the invention

Foamed coffee beverages with two layers are well known and accepted by consumers. These are typically formed by foaming a dairy or non-dairy creamer and heating in the cup, followed by pouring a coffee liquid prepared separately. In instant coffee, the formation of two layers is usually achieved through the combination of an instant coffee and a foaming creamer.

Introducing additional layers into foamed coffee beverages such as Latte Macchiato is complex and can be found only in coffee houses and mid to upscale restaurants. Specialized skills and careful attention are required to ensure that the layers do not mix into each other. The consistency of the final product may also vary depending on the skills of the operator and the available preparation time.

As multi-layered beverages have high appeal, consumers are now demanding similar experiences at home. Various approaches are known in the art to prepare a multi-layered drink.

For example, gums or stabilizers have been used to create a stable matrix and create layers in instant coffee compositions. US20090291187 relates to a multi-layered drink in which the adjacent layers have a difference in density of 0.4 to 10 kg/m³ and each layer contains at least one hydrocolloid. The hydrocolloids increase the viscosity of the respective layer, hence stabilizing it. Examples of hydrocolloids used include xanthan, locust bean gum, starch, modified starch, guar gum, pectin, modified cellulose, agar, carrageen, alginate, gelatin, gum arabic, or mixtures thereof.

EP2200448 describes a coffee composition which can provide a three-layered coffee drink in one step. The incorporation of particular carrageenans, namely kappa-carrageenan, iota-carrageenan or a mixture thereof will result in a three-layered drink on simple dilution with hot water, optionally, but preferably, with stirring. It is postulated that the middle gel layer is formed by the interaction of the kappa- or iota-carrageenan with the protein contained in dairy creamers, in particular caseins, and the mineral salts such as calcium and potassium salts associated with them.

US6129943 describes a particulate, dry mix foaming creamer which may be added to a coffee beverage to produce a cappuccino-type whitened beverage with a surface layer of foam.
Automated solutions have also been introduced in coffee machines to reduce the preparation time and allow consumers to drink layered beverages at home or in the office. For example, US7490638 relates to a method for dispensing a multi-layered beverage obtained from dilution of concentrates in proper dilution ratios. The difference of density between the first and second layers must be of at least 0.1% to create visually distinct layers.

WO2009037493 provides a method to prepare a beverage containing three or more distinct layers, where the method comprises dispensing a beverage into a receptacle comprising forming a first liquid in the receptacle and a foam layer on top of the first liquid layer and dispensing a second liquid from a dispensing unit positioned above or on top of the receptacle through the foam layer to form a second liquid layer between the first liquid layer and the foam layer.

EP1042960 describes a particulate creamer composition comprising denatured whey protein acting as gas entrapping medium, foam texturizer and stabilizer when the spray-dried creamer is reconstituted in a beverage. The creamer is particularly effective when dried mixed with chemical carbonation system.

EP1785369 describes a single container, such as a capsule, pod or bag, containing at least one beverage ingredient to produce a beverage when the ingredient inside the container interacts with a liquid introduced into the container. The interior of the container is sub-divided into at least a first and a second compartments, each compartment containing a beverage ingredient or a mix of beverage ingredient.

EP1129624 describes a beverage system comprising coffee concentrate and aromatized creamer separate from the coffee concentrate. Separating the coffee concentrate from the coffee aroma and incorporating the coffee aroma into the creamer improved stability of the concentrate. The beverage system provides a coffee beverage having foam on its surface such as cappuccinos and macchiato coffee.

WO2011063322 describes a chocolate beverage composition comprising discrete cocoa solids and a foaming creamer for providing a chocolate beverage having a white, non-discoloured foam on its surface.

EP1726536 describes a kit for preparing a coffee beverage, in particular cappuccino, café latte or Wiener mélange or the like, comprising a first container holding a coffee beverage ingredient, preferably coffee concentrate, a creamer and/or a foamer to be dispensed into a receptacle and a second container holding ground coffee.

For specialized automated devices, these however require large upfront costs and recurring maintenance expenses for the consumer.

Hence, there exists a need in the art for a new way of preparing an instant beverage with at least two layers which requires no skill or limited skill, and without the need for additional devices or appliances. Based on the known prior art, it is therefore the object of the present invention to provide a product that enables an end user to prepare a beverage with at least two layers in a new way, providing an improved consumption experience to the consumer.

### Summary of the invention

Accordingly, the present invention provides a kit configured for delivering a multi-layered beverage, wherein the kit comprises:
- a coffee component in the form of a liquid or liquid concentrate, for producing a dark layer, provided within individual pods containing a single serving; wherein the coffee component has a total solid content of less than 10% w/w; and
- a creamer component in the form of a powder, for producing a white layer, contained in a sachet; wherein the creamer component has a total solid content of at least 10% w/w; wherein the creamer comprises a protein, a fat and a carbohydrate, and wherein the fat content in the creamer is at most 10% w/w of the creamer composition and the fat comprises a combination of milk fat and vegetable fat.

The inventors surprisingly found that having no fat to very low fat content in the creamer enables the formation of a stable, multi-layered beverage.

The inventors further found that having vegetable fat as the main type of fat used in the powdered creamer composition positively impacts the stability of the layers.

### Brief Description of the Drawings

Figure 1 shows samples of multi-layered beverages prepared with different fat content (w/w) in the creamer: 16.25% (S1), 11.25% (S3), 6.25% (S5), 3.15% (S6) and 0% (S7).

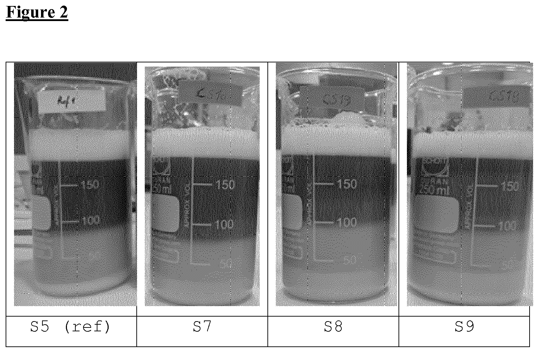

Figure 2 shows samples of multi-layered beverages prepared with different fat content (w/w) in the creamer: 6.25% (S5), 0% (S7, S8 and S9).

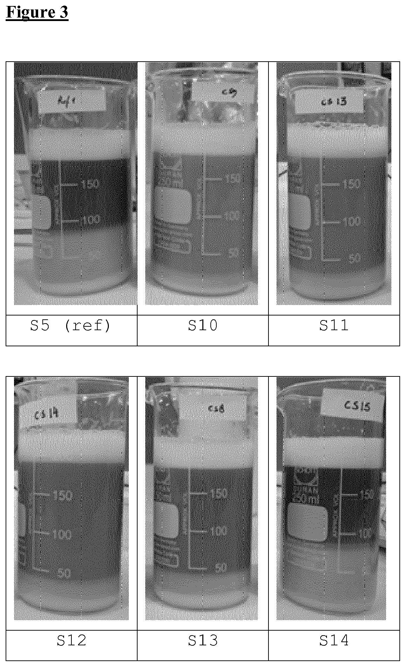

Figure 3 shows samples of multi-layered beverages prepared with 6.25% w/w vegetable fat (S5) and milk fat (in w/w): 18.2% (S10), 14% (S11), 11.2% (S12), 7% (S13), and 4.2% (S14).

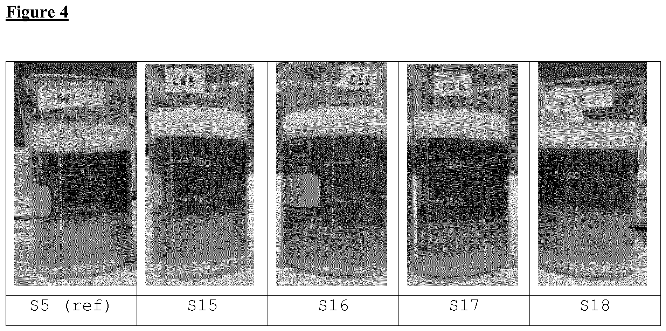

Figure 4 shows samples of multi-layered beverages prepared wherein the carbohydrate (sugar) has been partially replaced with non-digestible polysaccharides and/or digestible oligosaccharides at the following w/w levels: 80% (S5), 100% (S15), 52% (S16), 29% (S17) and 0% (S18).

### Detailed Description of the invention

The present invention relates to a kit configured for delivering a balanced and stable multi-layered beverage wherein the kit comprises a coffee component in the form of a liquid or liquid concentrate, for producing a dark layer, provided within individual pods containing a single serving; wherein the coffee component has a total solid content of less than 10% w/w; and a creamer component in the form of a powder, for producing a white layer, contained in a sachet; wherein the creamer component has a total solid content of at least 10% w/w; wherein the creamer comprises a protein, a fat and a carbohydrate, and wherein the fat content in the creamer is at most 10% w/w of the creamer composition and the fat comprises a combination of milk fat and vegetable fat.

By "balanced" layer formation in the multi-layered beverage, it is meant that the ratio of the height of the dark layer to the height of the white layer (dark layer:white layer) is in an amount from 2:3 to 3:2. Preferably, the ration dark layer:white layer is 1:1.

"Stable" layer formation is found when that at least two liquid layers are visually apparent through a transparent container, such as a glass, over a period of time of more than ten minutes, preferably more than thirty minutes, most preferably more than sixty minutes.

By "multi-layered beverage", it can mean at least two layers up to more than five layers. The beverage according to the invention preferably comprises two, three, four, or even five layers. The total solid content of the coffee component should be below 10% w/w, for example at 6% w/w.

In an embodiment, the coffee component is a liquid concentrate.

The coffee component can be prepared from coffee powder with the addition of water, or by direct extraction of ground coffee.

The coffee component can optionally have flavours, preservatives, buffer salts, enzymes, or other artificial ingredients.

The total solid content of the creamer component should be at least 10% w/w, for example at 12% w/w.

The creamer component of the present invention comprises a protein, a fat and a carbohydrate, wherein the fat content in the creamer is at most 10% w/w of the creamer composition.

The protein ingredient is any suitable protein or protein mixture. Suitable examples include milk solids, soy proteins, wheat proteins, gelatine and the like. The term "milk solids" refers to milk based products derived from different sources such as skim milk, whole pasteurized milk, skim milk powder, and cream. Other examples of suitable milk solids are casein, caseinate, casein hydrolysate, whey, whey hydrolysate, whey concentrate, whey isolate, milk protein concentrate, milk protein isolate, and combinations thereof. Furthermore, the milk protein may be, for example, sweet whey, acid whey, α-lactalbumin, β-lactoglobulin, bovine serum albumin, acid casein, caseinates, α-casein, β-casein and/or γ-casein. The protein is present in an amount from 3% to 12% w/w of the creamer.

The carbohydrate of the creamer composition can be sugars such as sucrose, glucose, maltose, maltodextrin, saccharose, dextrose and fructose, or combinations thereof. The sugar functions as a weighing agent and helps improve the mouthfeel of the resulting multi-layered beverage. The sugars can be partially replaced by other weighing agents such as non-digestible polysaccharides (e.g. resistant dextrins) that qualify as soluble dietary fibers, and digestible oligosaccharides such as glucose syrup. The carbohydrate is present in an amount from 35% to 65% w/w of the creamer.

The carbohydrate should be present in amount from 35% to 65% w/w of the creamer composition in order to optimize the layering effect of the beverage. This will help the coffee component at low total solids content to remain on top of the final beverage and to avoid the brownish mix-up with the white layer produced by the creamer.

The fat component of the creamer comprises a combination of milk fat and vegetable fat. The vegetable oils may comprise partially or wholly hydrogenated (saturated or unsaturated) oils, alone or in combination. The vegetable oils can include but are not limited to soybean oil, coconut oil, palm oil, palm kernel oil, cotton seed oil, canola oil, olive oil, sunflower oil, safflower oil and other oils, or a combination thereof. The fat is present in an amount of at most 10% w/w of the creamer.

The creamer can further comprise a foaming ingredient, such as those produced by gas entrapment under pressure for spray-dried articles. Such components are well known to those skilled in the art. The foaming ingredient according to the present invention is a gas-releasing ingredient comprising a matrix containing at least a foam-based-carbohydrate and entrapped gas under pressure. The foam-based-carbohydrate in the matrix may be any suitable carbohydrate that includes lactose, dextrose, fructose, sucrose, maltodextrin, corn syrup, starch, modified starch, cyclodextrin and mixtures thereof. The foaming agent is present in an amount of at most 60% w/w of the creamer.

The creamer can contain additional ingredients such as citric acid, trisodium citrate, flavoring agents, flavors, colorants, functional ingredients, emulsifying agents and any mixture thereof.

The creamer of the invention is in the form of a powder. The liquid used to reconstitute the creamer to produce the white layer may be cold or hot water.

The volumes of the dark layer and the white layer of the multi-layered beverage can be adjusted, as long as the total solids content of the coffee component is less than 10% w/w, and the total solids content of the creamer is at least 10% w/w. For example, a serving may be 25 mL of the coffee component (with a total solids content of 6% w/w) mixed with 150 mL of the powdered creamer component (with a total solids content of 12% w/w) reconstituted with hot water.

The multi-layered beverage product obtained according to the present invention may be consumed just after addition of the coffee component or allowed to stand since the generated layers may be retained, e.g. from 30 minutes to several hours.

The white liquid creamer composition has to be provided first before the coffee component is introduced. This minimizes the liquid motion to prevent mixing of layers due to diffusion and convection in the liquids.

For mixing of the coffee component to the creamer component, it is preferably not necessary to apply mixing, shaking or stirring after mixing with water. Indeed, a simple pouring of the coffee component to the creamer component already allows for the formation of the layers.

The flow rate for introducing the coffee component to the creamer component is advantageously carried out at a relatively slow linear velocity to reduce turbulence. Minimizing turbulence when introducing the coffee component is important to create and maintain distinct layers. This can be achieved through specialized pods with narrow tips / specific designs that can serve as packaging for the coffee component.

Temperature gradient is also important to set clear variation between the layers. Lower temperature difference between the reconstituted creamer composition and the coffee component reduces turbulence and diffusion and therefore, contributes to stabilize the layers.

### EXAMPLES

The Examples wherein the ranges are not falling within the claimed ranges are not part of the present invention.

### Example 1

**Table 1**

| Component | S1 | S2 | S3 | S4 | S5 | S6 | S7 |
|---|---|---|---|---|---|---|---|
| Non-dairy creamer with 25% vegetable oil; 38% skimmed milk powder | 13.0g | 10.0g | 9.0g | 8.0g | 5.0g | 2.5g | - |
| Skimmed milk powder | - | 3.0g | - | 5.0g | - | 2.5g | 5.0g |
| Foaming ingredient with 37% skimmed milk powder | 4.5g | 4.5g | 4.5g | 4.5g | 4.5g | 4.5g | 4.5g |
| Gluco-fibers (Promitor®) | - | - | 4.0g | - | 8.0g | 8.0g | 8.0g |
| Sugar | 2.5g | 2.5g | 2.5g | 2.5g | 2.5g | 2.5g | 2.5g |
| Total | 20.0g | 20.0g | 20.0g | 20.0g | 20.0g | 20.0g | 20.0g |
| | | | | | | | |

| Composition (g/serve) | S1 | S2 | S3 | S4 | S5 | S6 | S7 |
|---|---|---|---|---|---|---|---|
| Skimmed milk powder | 6.87 | 8.67 | 5.27 | 9.87 | 3.67 | 5.17 | 6.67 |
| Fat | 3.25 | 2.50 | 2.25 | 2.00 | 1.25 | 0.63 | 0.00 |
| Balanced layer formed (yes/no) | No | No | No | No | Yes | Yes | Yes |

Creamer powders were prepared according to Table 1. The compositions were reconstituted with 150ml hot water in a tall glass, resulting in a total solids content of 11.7% for the powdered creamer composition. After reconstitution, 25ml of coffee liquid with 6.4% total solids content (1.6g coffee diluted in 23.4g water) were each added to the solutions.

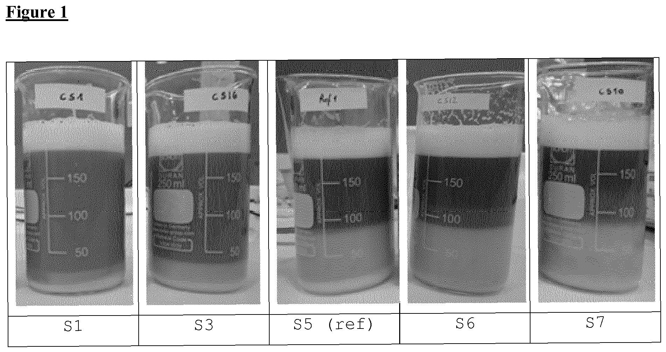

A better layer effect was observed in terms of ratio between the coffee component and the white component with samples where the fat content is below 10% of the creamer composition (S5, S6 and S7) (Fig. 1).

Once the fat content is at least 10% of the creamer composition (at least 2g of vegetable fat per serving) (S1, S2, S3 and S4), the coffee layer appeared visibly lighter, indicating a higher degree of mixing between the layers (Fig. 1).

### Example 2

**Table 2**

| Component | S5 | S7 | S8 | S9 |
|---|---|---|---|---|
| Non-dairy creamer with 25% vegetable oil; 38% skimmed milk powder | 5.0g | - | - | - |
| Skimmed milk powder | - | 5.0g | 8.0g | 13.0g |
| Foaming ingredient with 37% skimmed milk powder | 4.5g | 4.5g | 4.5g | 4.5g |
| Gluco-fibers (Promitor®) | 8.0g | 8.0g | 5.0g | - |
| Sugar | 2.5g | 2.5g | 2.5g | 2.5g |
| Total | 20.0g | 20.0g | 20.0g | 20.0g |
| | | | | |

| Composition (g/serve) | S5 | S7 | S8 | S9 |
|---|---|---|---|---|
| Skimmed milk powder | 3.57 | 6.67 | 9.67 | 14.67 |
| Fat | 1.25 | - | - | - |
| Balanced layer formed (yes/no) | Yes | Yes | Yes | Yes |

Creamer powders were prepared according to Table 2. The compositions were reconstituted with 150ml hot water in a tall glass, resulting in a total solid content of 11.7% for the powdered creamer composition. After reconstitution, 25ml of coffee liquid with 6.4% total solids content (1.6g coffee diluted in 23.4g water) were each added to the solutions.

A better layer effect was observed in terms of ratio between the coffee component and the white component with samples with essentially no fat in the composition (S7, S8 and S9). Increased levels of skimmed milk powder also leads to a more balanced layering effect.

### Example 3

**Table 3**

| Component | S5 | S10 | S11 | S12 | S13 | S14 |
|---|---|---|---|---|---|---|
| Non-dairy creamer with 25% vegetable oil; 38% skimmed milk powder | 5.0g | - | - | - | - | - |
| Full cream milk powder (28% milk fat) | - | 13.0g | 10.0g | 8.0g | 5.0g | 3.0g |
| Skimmed milk powder | - | - | - | - | - | - |
| Foaming ingredient with 37% skimmed milk powder | 4.5g | 4.5g | 4.5g | 4.5g | 4.5g | 4.5g |
| Gluco-fibers (Promitor®) | 8.0g | - | 5.5g | 7.5g | 8.0g | 8.0g |
| Sugar | 2.5g | 2.5g | - | - | 2.5g | 4.5g |
| Total | 20.0g | 20.0g | 20.0g | 20.0g | 20.0g | 20.0g |
| | | | | | | |

| Composition (g/serve) | S5 | S10 | S11 | S12 | S13 | S14 |
|---|---|---|---|---|---|---|
| Skimmed milk powder | 3.67 | 11.03 | 8.87 | 7.43 | 5.27 | 3.83 |
| Fat | 1.25 | 3.64 | 2.80 | 2.24 | 1.40 | 0.84 |
| Balanced layer formed (yes/no) | Yes | No | No | No | No | Yes |

Creamer powders were prepared according to Table 3. The compositions were reconstituted with 150ml hot water in a tall glass, resulting in a total solid content of 11.7% for the powdered creamer composition. After reconstitution, 25ml of coffee liquid with 6.4% total solids content (1.6g coffee diluted in 23.4g water) were each added to the solutions.

Poor layer formation was observed with the use of milk fat, except when it has reached less than 5% of the creamer composition (S14).

### Example 4

**Table 4**

| Component | S5 | S15 | S16 | S17 | S18 |
|---|---|---|---|---|---|
| Non-dairy creamer with 25% vegetable oil; 38% skimmed milk powder | 5.0g | 5.0g | 5.0g | 5.0g | 5.0g |
| Foaming ingredient with 37% skimmed milk powder | 4.5g | 4.5g | 4.5g | 4.5g | 4.5g |
| Gluco-fibers (Promitor®) | 8.0g | 10.5g | 5.5g | 3.0g | - |
| Sugar | 2.5g | - | 5.0g | 7.5g | 10.5g |
| Total | 20.0g | 20.0g | 20.0g | 20.0g | 20.0g |
| | | | | | |

| Composition (g/serve) | S5 | S15 | S16 | S17 | S18 |
|---|---|---|---|---|---|
| Skimmed milk powder | 3.67 | 3.67 | 3.67 | 3.67 | 3.67 |
| Fat | 1.25 | 1.25 | 1.25 | 1.25 | 1.25 |
| Balanced layer formed (yes/no) | Yes | Yes | Yes | Yes | Yes |

Creamer powders were prepared according to Table 4. The compositions were reconstituted with 150ml hot water in a tall glass, resulting in a total solid content of 11.7% for the powdered creamer composition. After reconstitution, 25ml of coffee liquid with 6.4% total solids content (1.6g coffee diluted in 23.4g water) were each added to the solutions.

All solutions exhibited good layer formation [equal split between coffee layer and creamer layer].

## Claims

1. A kit configured for delivering a multi-layered beverage wherein the kit comprises:
- a coffee component in the form of a liquid or liquid concentrate, for producing a dark layer, provided within individual pods containing a single serving; wherein the coffee component has a total solid content of less than 10% w/w; and
- a creamer component in the form of a powder, for producing a white layer, contained in a sachet; wherein the creamer component has a total solid content of at least 10% w/w; wherein the creamer comprises a protein, a fat and a carbohydrate, and wherein the fat content in the creamer is at most 10% w/w of the creamer composition and the fat comprises a combination of milk fat and vegetable fat..

2. The kit of claim 1 wherein the protein ranges from 3 to 12% w/w of the creamer composition.

3. The kit of claim 2 wherein the protein comprises milk solids, soy proteins, wheat proteins, gelatine and the like.

4. The kit of claim 1 wherein the carbohydrate comprises sugar or non-caloric sweetener.

5. The kit of claim 1 wherein the carbohydrate ranges from 35 to 65% w/w of the creamer composition.

6. The kit of claim 4 or 5 wherein the carbohydrate is sugar comprising sucrose, glucose, maltose, maltodextrin, saccharose, dextrose and fructose, or combinations thereof.

7. The kit of claim 1 wherein carbohydrate is partially replaced with non-digestible polysaccharides and/or digestible oligosaccharides.

8. The kit of claim 1 wherein the creamer further comprises a foaming ingredient, said the foaming ingredient being a gas-releasing ingredient comprising a matrix containing at least a foam-based-carbohydrate and entrapped gas under pressure.

9. The kit of claim 8, wherein the foam-based-carbohydrate comprises lactose, dextrose, fructose, sucrose, maltodextrin, corn syrup, starch, modified starch, cyclodextrin and mixtures thereof.

10. The kit of claim 8 or 9, wherein the foaming ingredient ranges is at most 60 % w/w of the creamer composition.

## Patentansprüche

1. Kit, das zum Abgeben eines mehrschichtigen Getränks konfiguriert ist, wobei das Kit umfasst:
- eine Kaffeekomponente in der Form einer Flüssigkeit oder eines flüssigen Konzentrats, zur Herstellung einer dunklen Schicht, bereit gestellt innerhalb einzelner Kapseln, die eine einzelne Portion enthalten; wobei die Kaffeekomponente einen Gesamtfeststoffgehalt von weniger als 10 Gew.-% aufweist; und
- eine Kaffeeweißerkomponente in Form eines Pulvers zur Herstellung einer weißen Schicht, die in einem Beutel enthalten ist; wobei die Kaffeeweißerkomponente einen Gesamtfeststoffgehalt von mindestens 10 Gew.-% aufweist; wobei der Kaffeeweißer ein Protein, ein Fett und ein Kohlenhydrat umfasst und wobei der Fettgehalt in dem Kaffeeweißer höchstens 10 Gew.-% der Kaffeeweißerzusammensetzung beträgt und das Fett eine Kombination aus Milchfett und Pflanzenfett umfasst..

2. Kit nach Anspruch 1, wobei das Protein im Bereich von 3 bis 12 Gew.-% der Kaffeeweißerzusammensetzung liegt.

3. Kit nach Anspruch 2, wobei das Protein Milchfeststoffe, Sojaproteine, Weizenproteine, Gelatine und dergleichen umfasst.

4. Kit nach Anspruch 1, wobei das Kohlenhydrat Zucker oder nichtkalorischen Süßstoff umfasst.

5. Kit nach Anspruch 1, wobei das Kohlenhydrat im Bereich von 35 bis 65 Gew.-% der Kaffeeweißerzusammensetzung liegt.

6. Kit nach Anspruch 4 oder 5, wobei das Kohlenhydrat Zucker ist, der Saccharose, Glucose, Maltose, Maltodextrin, Saccharose, Dextrose und Fructose oder Kombinationen davon umfasst.

7. Kit nach Anspruch 1, wobei Kohlenhydrat teilweise durch unverdauliche Polysaccharide und/oder verdaubare Oligosaccharide ersetzt ist.

8. Kit nach Anspruch 1, wobei der Kaffeeweißer ferner einen schäumenden Bestandteil umfasst, wobei der schäumende Bestandteil ein gasfreisetzender Bestandteil ist, der eine Matrix umfasst, die mindestens ein Kohlenhydrat auf Schaumbasis und eingeschlossenes Gas unter Druck enthält.

9. Kit nach Anspruch 8, wobei das Kohlenhydrat auf Schaumbasis Lactose, Dextrose, Fructose, Saccharose, Maltodextrin, Maissirup, Stärke, modifizierte Stärke, Cyclodextrin und Mischungen davon umfasst.

10. Kit nach Anspruch 8 oder 9, wobei der schäumende Bestandteil im Bereich von höchstens 60 Gew.-% der Kaffeeweißerzusammensetzung liegt.

## Revendications

1. Trousse configurée pour distribuer une boisson multicouche dans laquelle la trousse comprend :
- un composant de café sous la forme d'un liquide ou concentré liquide, pour produire une couche sombre, fourni au sein de capsules individuelles contenant une portion unique ; dans laquelle le composant de café a une teneur totale en solides inférieure à 10 % en poids ; et
- un composant de crème à café sous la forme d'une poudre, pour produire une couche blanche, contenu dans un sachet ; dans laquelle le composant de crème à café a une teneur totale en solides d'au moins 10 % en poids ; dans laquelle la crème à café comprend une protéine, une matière grasse et un glucide, et dans laquelle la teneur en matière grasse dans la crème à café est d'au plus 10 % en poids de la composition de crème à café et la matière grasse comprend une combinaison de matière grasse de lait et de matière grasse végétale..

2. Trousse selon la revendication 1, dans laquelle la protéine va de 3 à 12 % en poids de la composition de crème à café.

3. Trousse selon la revendication 2 dans laquelle la protéine comprend des solides de lait, des protéines de soja, des protéines de blé, de la gélatine et analogues.

4. Trousse selon la revendication 1, dans laquelle le glucide comprend du sucre ou un édulcorant non calorique.

5. Trousse selon la revendication 1, dans laquelle le glucide va de 35 à 65 % en poids de la composition de crème à café.

6. Trousse selon la revendication 4 ou 5 dans laquelle le glucide est du sucre comprenant du saccharose, du glucose, du maltose, de la maltodextrine, du saccharose, du dextrose et du fructose, ou des combinaisons de ceux-ci

7. Trousse selon la revendication 1, dans laquelle le glucide est partiellement remplacé par des polysaccharides non digestibles et/ou des oligosaccharides digestibles.

8. Trousse selon la revendication 1, dans laquelle la crème à café comprend en outre un ingrédient moussant, ledit ingrédient moussant étant un ingrédient libérant un gaz comprenant une matrice contenant au moins glucide à base de mousse et un gaz sous pression piégé.

9. Trousse selon la revendication 8, dans laquelle le glucide à base de mousse comprend du lactose, du dextrose, du fructose, du saccharose, de la maltodextrine, du sirop de maïs, de l'amidon, de l'amidon modifié, de la cyclodextrine et des mélanges de ceux-ci

10. Trousse selon la revendication 8 ou 9, dans laquelle la plage d'ingrédient moussant est d'au plus 60 % en poids de la composition de crème à café.
